# EUROPEAN PATENT SPECIFICATION

(11) **EP 2 914 128 B1**
(45) Date of publication and mention of the grant of the patent: **31.01.2018**
(21) Application number: 13801856.9
(22) Date of filing: 30.10.2013
(51) Int. Cl.: A23L 29/10, A23L 29/281

(54) **EMULSIFIER**
EMULGATOR
ÉMULSIFIANT

(30) Priority: 31.10.2012 NL 1039867
(43) Date of publication of application: 09.09.2015
(73) Proprietor: Rousselot B.V., 5691 NM Son (NL)
(72) Inventor: CAPDEPON, Claude, F-59960 Neuville en Ferrain (FR); STEVENS, Paul, B-9042 Gent Mendonk (BE); MAUGENET, Marine, B-9040 Sint-Amandsberg (BE)
(74) Representative: Algemeen Octrooi- en Merkenbureau B.V.
(86) International application number: PCT/NL2013/050769
(87) International publication number: WO 2014/070002

(56) References cited:
- FR-A1- 2 823 421
- US-A- 5 126 161
- US-A1- 2002 182 303

## Description

The invention relates to a novel emulsifier, comprising hydrolysed gelatin and a hydrocolloid, to a method of preparing the same, to food products comprising the said novel emulsifier and to the use of the said emulsifier.

In the art, such emulsifiers are known, wherein the hydrocolloid is e.g. xanthan gum, guar gum, carob gum, carrageenan, Arabic gum, starches, hydroxymethylpropylcellulose (HPMC). A disadvantage of any of these emulsifiers is the fact that these have to be declared on the label of the food product comprising the said emulsifier.

US 2002/0182303 describes the use of hydrolysed gelatin as an emulsifier in mayonnaise. The present invention now provides an attractive alternative emulsifier for emulsions, in particular food emulsions, like oil-in water emulsions, but also water-in-oil emulsions, and is characterized in that the hydrocolloid of the emulsifier of the above art comprises a low bloom gelatin having a bloom value of 125 or less. The said emulsifier also stabilises such emulsions, and can therefore also be regarded as a stabiliser. The emulsifier according to the invention is therefore also referred to herein as emulsifier/stabiliser.

Gelatin is a mixture of water-soluble proteins, derived from collagen. Gelatin is obtained e.g. by partial hydrolysis of collagen, obtained by aqueous extraction of skin, tendons, ligaments, bones etc. in acid or alkali conditions, or by enzymatic hydrolysis. Gelatin obtained by acid treatment is called Type A gelatin, whereas Type B gelatin is derived from alkali treatment. Gelatin is commonly used as gelling agent in food, pharmaceuticals and cosmetics.

Gelatin is defined by its bloom, or gel strength. It forms a thermoreversible gel at room temperature, and requires hot water to dissolve. It is e.g. used as gel former and texturizer in fruit gums and gelatin desserts. The gel strength of a gelatin gel can be determined by standardized apparatuses (GME, see the examples), such as a QTS 25 Texture Analyser (Brookfield Viscometers) or a Texture Analyser TA-XT2 (Stable Micro Systems Ltd., London), and is indicated by a bloom number. The test was originally developed in 1925 by O. T. Bloom (US 1,540,979 and US 2,119,699). The test determines the weight (in grams) needed by a probe (normally with a diameter of 0.5 inch) to deflect the surface of the gel 4 mm without breaking it. The result is expressed in bloom (grades). It is usually between 30 and 300 bloom. The higher the bloom number, the stronger the gel. To perform the bloom test on gelatin, a 6.67% gelatin solution is kept for 17-18 hours at 10°C prior to being tested. The term 'low bloom' reflects a bloom number of 50-125, whereas 'medium bloom' reflects a bloom number of 150-225, and 'high bloom' reflects a bloom number (also referred herein as 'bloom value') of 250-325. Low bloom gelatin has an average molecular mass Mw of about 50-125kDa.

Further hydrolysis results in so-called 'hydrolysed gelatin', also known as 'hydrolysed collagen', comprising small peptides having an average molecular weight of less than 20kDa, e.g. between 5 and 15kDa. Because of the relatively small molecules, hydrolysed gelatin has no jellifying effect. Hydrolysed collagen is e.g. used as texture conditioner and moisturizer in topical crèmes, and is also used in nutritional products because of the high glycine and proline content.

The average molecular weight of both gelatin and hydrolysed gelatin can be determined by methods, known in the art, e.g. by HPLC size exclusion chromatography.

The present inventors have surprisingly found that an emulsifier/stabilizer comprising a blend of hydrolysed gelatin and gelatin having a bloom value of 125 or less has at least comparable qualities as compared with emulsifiers comprising hydrolysed gelatin and another hydrocolloid than low bloom gelatin. Herein, gelatin having a bloom value of 125 or less is also referred to as 'low bloom gelatin'. One of the main advantages is the fact that the emulsifier/stabilizer of the invention is 'clean label', meaning that no declaration of an E number on the label of a food product has to be made according to European food authorities. Further, the emulsifier/stabilizer of the invention is colour and taste neutral. Further, the emulsifier/stabilizer according to the invention does not gel at lower storage temperatures of e.g. 4-10°C and still has the required emulsifying properties at those temperatures.

Based on the total weight of the hydrolysed gelatin and the low bloom gelatin, the emulsifier according to the invention preferably comprises 85-98 w/w%, more preferably 90-95 w/w% and most preferably 92-93 w/w% hydrolysed gelatin, and therefore preferably 5-15 w/w%, more preferably 5-10 w/w%, most preferably 7-8 w/w% low bloom gelatin. It has been observed that a gelatine content of above 15 w/w%, results in increased gelling tendency, whereas at a gelatin content of below 2 w/w%, the stability is low.

The low bloom gelatin can be of any origin, such as from pig, bovine fish etc. It can be of type A or type B, or can be prepared by enzymatic hydrolysis. In order to avoid undesired gelling of the envisaged emulsions, the low bloom gelatin preferably has a bloom value of 125 or less, more preferably of 100 or less. In a particularly attractive embodiment, the bloom value is comprised between 40 and 60, preferably around 50. As indicated above, this bloom value corresponds to an average molecular weight of about 70kDa. Accordingly, the low bloom gelatin preferably has an average molecular weight between 50 and 125kDa, more preferably between 60 and 100 kDa, and most preferably of about 70kDa. With 'about', 5% under or above the said value is deemed to be allowed.

The average molecular weight of the hydrolysed gelatin in the emulsifier of the present invention is preferably 20 kDa or less, preferably above 2 kDa, even more preferably between 2-10 kDa, most preferably about 5 kDa. With 'about', 5% under or above the said value is deemed to be allowed. It has been observed that when hydrolysed gelatin having an average molecular weight of below 2kDa is used in the emulsiefier according to the invention, a less stable product is obtained. The emulsifier/stabilizer according to the invention is a blend of the hydrolysed gelatin and the low bloom gelatin. Preferably, no other hydrocolloids are present. Apart from a certain moisture (water) content, the blend preferably does not comprise more than 10 w/w% other ingredients, more preferably not more than 5 w/w%, even more preferably not more than 2w/w%. More preferably, no other ingredients than water are present. The moisture content is usually 5-15 w/w%, more preferably 7-12 w/w%, and is usually about 9 w/w%. With 'about', 5% under or above the said value is deemed to be allowed.

In order to obtain a stable blend of the hydrolysed gelatin and the low bloom gelatin , the particle size of the hydrolysed gelatin corresponds with that of the low bloom gelatin. The said particle size is preferably expressed in mesh, which means that the particles of a certain mesh size pass through a sieve having the said mesh size. Below that mesh size, not all particles would pass. The mesh size used herein corresponds with that of the US standard ASTM E11:01. This means that particles having a particle size of 100 mesh would all pass though a no. 100 mesh, i.e. having a mesh aperture size of 0.15 mm. Through a sieve of a higher number (i.e. with smaller apertures), not all particles would pass.

Low bloom gelatin usually has a particle size of about 8 to 30 mesh (2.36 - 0.60 mm). Hydrolysed gelatin may have a particle size 70 to 120 mesh (i.e. 0.21 - 0.125 mm). Preferably, the particle size of the low bloom gelatin is also brought to that size. Most preferably, both ingredients have a particle size of about 100 mesh (i.e. 0.15 mm). With 'about', 5% under or above the said value is deemed to be allowed. The skilled person is aware of suitable methods to produce low bloom gelatin of the proper particle size, e.g. by grinding and sieving.

Instead of dry mixing particulate of hydrolysed gelatin and low bloom gelatin, both components can be dissolved in a liquid medium, preferably an aqueous medium, to form an emulsifier solution, and then form a particulate from the solution by drying, e.g. by spray drying or drum drying, resulting in uniform particles, wherein each of the particles may comprise both the components. The skilled person is aware of suitable methods, and is capable of adjusting the particle size to any desired size. Very advantageously, it has been found that a blend of the invention obtained by spray drying or drum drying is soluble at ambient temperature (i.e. at 20-24°C). Usually, gelatin and blends of gelatin and hydrolysed gelatin dissolve at higher temperatures of at least 50°C. The blend of the invention can very advantageously be used in the preparation of instant dairy mousse, in particular chocolate mousse, the recipes thereof being preferably prepared at ambient temperature.

In another aspect, the invention relates to the use of the emulsifier according to the invention in the preparation of a food product or food ingredient, e.g. as an egg substitute. It has been found that the emulsifier according to the invention can advantageously replace eggs in a recipe for a food product, such as for example mayonnaise, salad dressing, pate (liver paste). In particular for the preparation of these food products, especially mayonnaise, the emulsifier has shown to be very advantageous. Using the emulsifier of the invention results in an egg-free mayonnaise that can hardly be discriminated from mayonnaise prepared with eggs, both with regard to texture as well as to taste. The same is true for e.g. salad dressing and pate.

The invention also relates to a food product or food ingredient comprising the emulsifier according to the invention, such as dairy food products, bakery products, confectionery, chewy candy etc. The said food product or food ingredient preferably comprises 0,5 - 25 w/w% of the emulsifier, more preferably 1-15 w/w%, most preferably 5-8 w/w%, based on the total ingredients of the food product. In particular, the food product is mayonnaise or dairy mousse, preferably mayonnaise. The mayonnaise preferably comprises 5-8 w/w%, based on the mayonnaise of the emulsifier/stabiliser of the invention. Dairy mousse preferably comprises 18-22 w/w%, based on the mousse, of the emulsifier/stabiliser of the invention.

As the emulsifier of the invention is also soluble at ambient temperature, an instant dry mix of the necessary ingredients for a dairy mousse, in particular of a chocolate mousse can be prepared, whereto only water of ambient temperature has to be added, without the need for additional heating. The invention therefore also relates to such instant mixes and to the use of the emulsifier of the invention as an ingredient of a dry mix for the preparation of a dairy mousse, in particular of a chocolate mousse.

The invention will now be further explained by the following examples that are however not intended to limit the scope of the claims.

### Examples:

### 1: Preparation of the emulsifier

Starting materials
Gelatin hydrolysate
Peptan™ P2000 LD (Rousselot, France), average molecular weight 2kDa
Peptan™ P5000 HD (Rousselot, France), average molecular weight of about 5kDa
ASF (Rousselot Sonac, Belgium), average molecular weight of about 5kDa
Hydrolysat APC (Rousselot, France) a semi finished product (Rousselot, France), average molecular weight of about 5kDa.

Gelatin:
Gelatin 50PS (Rousselot, Belgium), 50 bloom, derived from acid hydrolysis of pig skins
Gelatin 75 PS (Rousselot, Belgium), 75 bloom, derived from acid hydrolysis of pig skins
Gelatin 100 PS (Rousselot, Belgium), 100 bloom, derived from acid hydrolysis of pig skins
Gelatin 125 PS (Rousselot, Belgium), 125 bloom, derived from acid hydrolysis of pig skins
Gelatin 50LB (Rousselot, Belgium), 50 bloom, derived from alkaline hydrolysis of bovine bones
Gelatin 50AH (Rousselot, Belgium), 50 bloom, derived from acid hydrolysis of bovine hides.
Gelatin 125 FG (Rousselot, Belgium), 125 bloom, derived from acid hydrolysis of fish skins

The particle size of the above gelatins vary in particle size from 8 to 60 mesh.
The gelatins were grinded to a mesh size of 100 mesh (unless otherwise indicated) as follows: Grinding is done on a type Ultrafin V50 and sieved over a 150 µm Russell sieve at a flow rate of 100 to 120 kg/hour.

Different gelatins and gelatin hydrolysates were mixed to dry blends (i.e. by mixing gelatin hydrolysate powder with gelatine powder) in different ratios, varying from 85-98 w/w% hydrolysed gelatin : 15-2 w/w% gelatin, see also to tables 1 and 2. These blends are to be regarded as the emulsifiers/stabilisers of the invention. The moisture content of the blends was 8 to 10 w/w%.

The results of the measurements below are given in the appended tables.

### 2. Determination of the bloom value

The bloom values were determined according to the standard bloom test as described in GME Monograph Standarised Methods for the testing of Edible Gelatin, version 8, 2012 (herein also referred to as 'GME8'), using a Texture Analyser TA-XT2 (Stable Micro Systems Ltd., London), a standard plunger and a standard bloom bottle (Schott, Germany)._The bloom values of the gelatin starting materials were compared and corresponded with those as given in the manufacturer's product data sheets.

### 3. Determination of the viscosity

The viscosity was determined according to the standard as described in GME8. For both the hydrolysate and the blends, a 20 w/w% solution was used to measure the viscosity.

### 4. Determination of the moisture content

The moisture content was determined according to the standard as described in GME8.

### 5. Determination of the colour

The colour was determined according to the standard as described in GME8.

### 6. Odour testing

The odour of samples a 20 w/w% solution of gelatin and hydrolysed gelatin used for the preparation of the emulsifier blends, as well as the said emulsifier blends were tested by an expert panel. Values of 1 to 4 were give, wherein 1 stands for odour neutral, and 4 for unattractive odour.

### 7. Emulsion tests

### Emulsion preparation

26 g of gelatin, hydrolysed gelatin or of a blend was dispersed in 80 g demineralised boiling water under stirring. The solution was kept for 10 minutes at 60°C, and subsequently for 1 hour at ambient temperature. The solution is then poured into a Thermomix blender (Thermomix Benelux, Netherlands). 320g Sunflower oil was added under stirring at speed 3-4. This pre-emulsion is then finished with An Ultra-Turrax (IKA Werke GmbH, Germany) at max speed.

The particle size of the emulsion was measured in a Mastersizer (Malvern instruments, UK) according to the instructions of the manufacturer. A droplet of the emulsion was introduced in the sample dispersion unit at a speed of 1000. Using th emanufacturer's software, the first peak of the generated graph gives the droplet size.

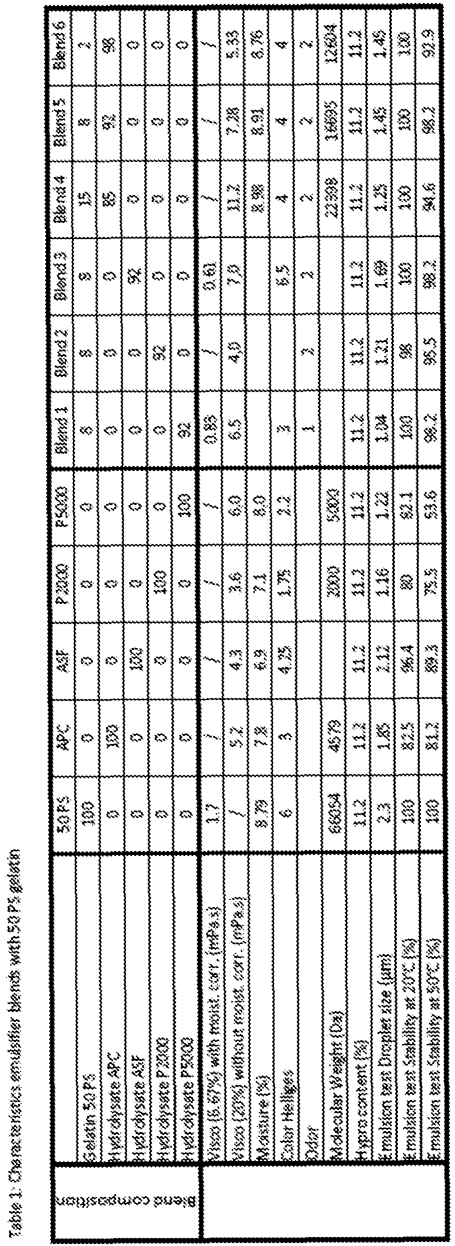

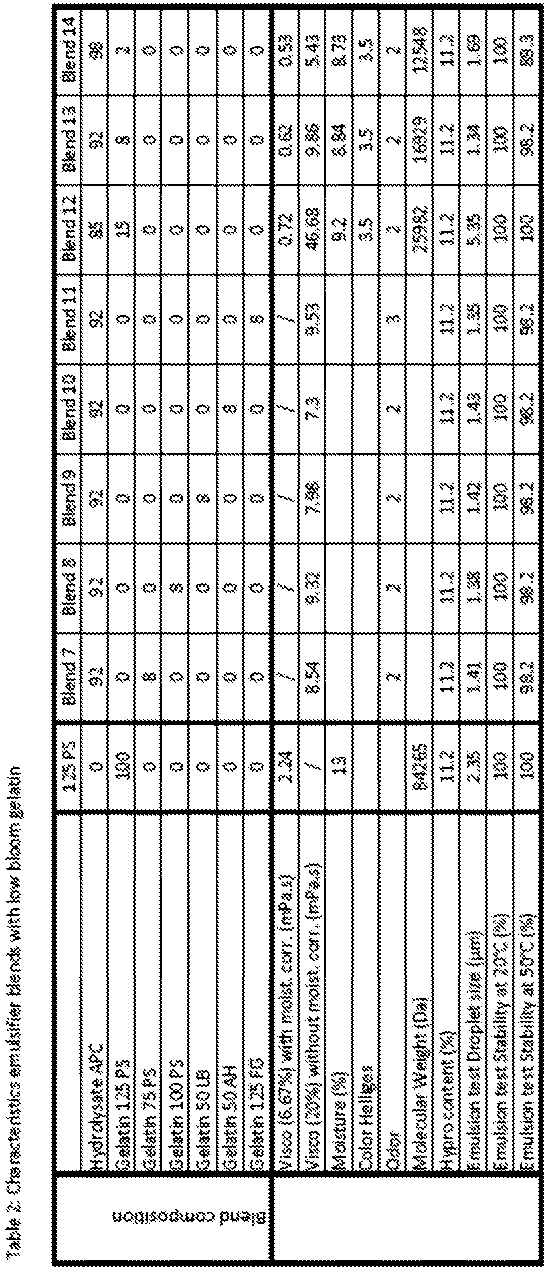

### Stability index

10 g of the Emulsion is centrifuged for 5 minutes at 5500 rpm in a laboratory centrifuge (Hettich, Germany) at 20°C, and incubated at 50°C for 15 minutes. Again, the sample is centrifuged for 5 minutes at 5500 rpm in a laboratory centrifuge at 20°C. The stability index is determined as volume total oil - volume released oil) / volume total oil. The stability index ranges from 0 to 100 (0: completely unstable / 100: very high stability).

It is to be observed that the stability at 20°C should preferably be as high as possible, i.e. preferably with a value of 100. However, values of 97 or higher are acceptable, preferably 98 or higher, more preferably 99 or higher, most preferably being 100. The stability at 50°C should also preferably be as high as possible, preferably with a value of about 98 or higher. However, values of 91 or higher are acceptable, preferably 92 or higher, more preferably 94 or 95 or higher, most preferably being about 98 or higher. 'About' means that a deviation of the value by 0.5 is allowed.

### 8. Determination of the average molecular weight

The molecular weight profile of gelatine/gelatin hydrolysates is determined by size exclusion chromatography (SEC). SEC is a type of liquid chromatography where the separation mechanism relies mainly on the size and shape of the polymer molecules in solution. The different molecules are eluted from the column in the reverse order of their molecular size. SEC represents one of the most important methods for the determination of average molecular weights (Mw, Mn, Mz, Mv).

### Sample preparation:

1 g of gelatine, gelatine hydrolysate or a blend thereof was weighed in a 50ml flask and filled to 50ml with UP water, and swelled for half an hour. Subsequently, the sample was heated to 40°C for half an hour, and the solution was diluted 10x in a HPLC vial with water.

### Eluent preparation:

0.1M Na₂SO₄ (28.4g) and 0.01 M NaH₂PO₄ (3.12g) were mixed with with 20g of SDS in a 2l bottle, and diluted to 2l with UltraPure water (1% SDS solution), and the pH was adjusted to 5.3 with NaOH.

To determine the average molecular weight of any gelatin hydrolysate in the sample, 20 µl of the sample was loaded on TSK G2000 SWXL plus Precolumn.
To determine the average molecular weight of any gelatin or blend of gelatin and gelatin hydrolysate in the sample, 20 µl of the sample was loaded on 4 columns PL Aquagel (1 column OH 60. Varian (8µm, 300 x 7.5 mm + 2 columns OH 50. Varian (8µm, 300 x 7.5 mm). +1 column OH 40. Varian (8µm, 300 x 7.5 mm)).
Agilent HPLC, 1260 Infinity series (Agilent Technologies, Germany) was used.
The Flow rate was 0.5 ml/min, the column temperature was 40°C.
Samples were measured by an UV detector (photo diode array, Agilent Technologies, Germany) at 210 nm.

### Calibration curves

Collagen hydrolysates: It has been chosen a third order calibration curve with the injection of the polystyrene sulfonate sodium and petides of Mw: 208Da, 1274, 4210, 6430,15800 and 29500Da.
Gelatine: a third order calibration curve was made using polystyrene sulfonate sodium and peptides of Mw:15800, 29500, 78400, 150000, 462000, 678000 and 976000 Da. For the blends, peptides having a Mw of 687, 462, 150, 87.4, 29.5, 15.8, 6.4, 4.2 and 1.3 kDa were used.

Agilent Cirrus software was used to automatically calculate and store the values of Mn, Mw, Mz and polydispersity (Mw/Mn).

### 9. Determination of content of gelatin and gelatin hydrolysate by the hydroxyproline content

Gelatin is the only major protein comprising hydroxyproline. The hydroxyproline contribution by any other source than by gelatin and hydrolysed gelatin can be neglected. The content of hydroxyproline is therefore a faithful way to determine the content of gelatin and hydrolysed gelatine in a sample. This test is therefore performed to check whether a sample is pure or whether it contains other ingredients or contaminations. Edible gelatine of bovine and porcine raw material typically contains a minimum of 11% hydroxyproline.

The method is based on the oxidation of hydroxyproline with chloramine T in aqueous solution.

The sample with a known moisture content is hydrolyzed with 37w/w% HCl (105°C at 16±1 hours), and subsequently oxidized with chloramine T (14 g in 150 ml water). This product is coloured at 70°C by 4-dimethylaminobenzaldehyde (pDAB) at (60g pDAB in 90 ml perchloric acid). The staining intensity of the chromogen obtained is measured at 550 nm (San⁺⁺ Continuous Flow Analyzer, Skalar Analytical B.V., the Netherlands) and is proportional to the amount of hydroxyproline in the original sample. The staining intensities measured are compared with the staining of known hydroxyproline concentrations under the same conditions.

Based on the measurement, the gelatin and hydrolysed gelatin content is deducted from coefficients, given in the table below. The determined value of hydroxyproline content has to be multiplied by the coefficient to arrive at the content of gelatin and hydrolysed gelatin. The coefficient is dependent on the moisture content.

**Table 3: hydroxyproline coefficients at different moisture**

| GELATIN ORIGIN | COEFF. | COEFF. | COEFF. | COEFF. |
|---|---|---|---|---|
| | 12% MOISTURE | 0% MOISTURE | 9% MOISTURE | 10% MOISTURE |
| ALKALINE BOVINE BONES | 7.75 | 8.81 | 7.99 | 7.91 |
| ALKALINE BOVINE HIDES | 8.41 | 9.56 | 8.67 | 8.58 |
| ACID PIG SKIN | 8.67 | 9.85 | 8.94 | 8.85 |
| TURKEY LEGS | 8.52 | 9.68 | 8.78 | 8.69 |
| TILAPIA (FISH) | 9.4 | 10.68 | 9.69 | 9.59 |
| BOVINE HIDES | 9.58 | 10.89 | 9.88 | 9.78 |

### 0. Drying of the blend

### Spray drying:

64.4Kg of APC and 5.6kg of gelatin 50PS was mixed and 30kg of water was added. This 70% solution was fed into the drying chamber of a spray dryer at a temperature of 190-250°C. The spray dried particles were of a size of 80 to 120 mesh and were collected from a cyclone, arranged downstream of the spray dryer, The outlet temperature of the cyclone was 70-130°C.

### Drum drying:

The 70% solution as prepared for spray drying was injected onto the drum of a drum dryer. The surface temperature of the drum (having a diameter of 500 mm) was kept between 140-170°C, the drum speed was 15-20 s/loop, and the steam was collected and removed from the dryer. Dried flakes were removed from the drum surface and collected. The flakes were grinded as described above for the gelatin.

### 11. Determination of the solubility

The solubility was determined according to the standard for turbidity as described in GME8. The solubility was measured at both 20°C and 50°C on solutions of dry blends 1, 3 and 5 (see table 1), as well as on solutions prepared from the said blends, but prepared by either spray drying or drum drying (see example 10). The solubility (expressed as turbidity value NTU) of the spray dried and drum dried samples had a solubility of less than 40 NTU at both temperatures, as well as the dry mix samples at 50°C. The solubility of the dry mix samples at 20°C were however above 40 NTU.

### 12. Preparation of egg free mayonnaise

A smooth tasty and creamy, cholesterol free, clean label mayonnaise was prepared in a common manner. Instead of egg yolk, a blend of 92 w/w% hydrolysed gelatin and 8 w/w% gelatin 50 bloom were used. (The type of hydrolysed gelatin and of the low bloom gelatin can be any of those as claimed herein. E.g. 50 bloom gelatin, such as Gelatin 50PS or 50LB or 50LH, and Peptan™ P5000 HD, ASF or hydrolysat APC can be used, preferably, a 50 bloom gelatin, in particular of the PS type and hydrolysat APC or Peptan™ P5000 HD are used).

An attractive recipe contains:
73.4 w/w% oil, such as canola oil, rapeseed oil
9.7 w/w% water
3.6 w/w% mustard (this ingredient can optionally be left out and water can be taken instead)
1.6 w/w% sugar
0.8 w/w% salt
4.4 w/w% white vinegar
6.5 w/w% blend 5

Other blends as described herein, in particular those of tables 1 and 2 can also be used instead of blend 5.

### 13. Preparation of a dry blend for the preparation of chocolate mousse

52.2 w/w% of blend 13 or blend 5
28.7 w/w% sugar
14.9 w/w% cocoa powder
4.2 w/w% skim milk powder

380g Dry blend is brought in 620g whole milk with a whisk. By using drum dried or spray dried blends this can be done with milk at ambient temperature. With dry blends, it is preferred to heat the milk to about 50°.C The preparation is kept 1 hour in the fridge, and beaten with a planetary beater and subsequently stored in the fridge. Other blends as described herein, in particular those of tables 1 and 2 can also be used instead of blend 13 or blend 5.

### 14. Replacement of egg yolk by the novel emulsifier in salad dressing

### Reference recipe:

47.8 w/w% Water
34.0 w/w% Sunflower oil
3.4 w/w% Egg yolk
4.0 w/w% Starch
4.7 w/w% Vinegar
4.2 w/w% Sugar
1.4 w/w% Salt
0.5 w/w% Preservative

The ingredients are mixed in a usual manner. In a second recipe, the egg yolk was replaced by 2.4 w/w% of emulsifier of the invention according to blend 5, 9 or 10, although also the other blends as mentioned in tables 1 and 2 can be used. The water was compensated to 48.8 w/w%.
Replacement by the emulsifier of the invention results in a salad dressing with similar characteristics as the reference recipe in terms of texture, color and taste.

### 15. Replacement of eggs by the novel emulsifier in pâté (liver paste)

### Reference recipe:

28.0 w/w% Liver
37.5 w/w% Fat
22.2 w/w% Milk
2.5 w/w% Eggs
2.5 w/w% Rice flour
1.6 w/w% Salt
0.5 w/w% Mono- and diglycerides
5.2 w/w% Spices

The pate is prepared in a usual manner. In a second recipe, the eggs were replaced by 2.5 w/w% of emulsifier of the invention according to blend 5, 9 or 10, although also the other blends as mentioned in tables 1 and 2 can be used.
Replacement by the emulsifier of the invention gives a pate with similar characteristics as the reference recipe in terms of texture, spreadability and taste.

## Claims

1. Emulsifier, comprising hydrolysed gelatin and a hydrocolloid, **characterized in that** the hydrocolloid comprises low bloom gelatin having a bloom value of 125 or less.

2. Emulsifier according to claim 1, comprising, based on the total weight of the hydrolysed gelatin and the low bloom gelatin:
85 - 98 w/w% hydrolysed gelatin and 15 - 2 w/w% low bloom gelatin,
preferably 90 - 95 w/w% hydrolysed gelatine and 10 - 5 w/w% low bloom gelatin, more preferably 92 - 93 w/w% hydrolysed gelatine and 8 - 7 w/w% low bloom gelatin.

3. Emulsifier according to claim 1 or 2, wherein the low bloom gelatin has a bloom value of 100 or less, preferably of 40 - 60 most preferably of about 50.

4. Emulsifier according to any of the preceding claims, wherein the low bloom gelatin has an average molecular weight between 50 and 125kDa, preferably between 60 and 100 kDa, most preferably of about 70kDa.

5. Emulsifier according to any of the preceding claims, wherein the hydrolysed gelatin has an average molecular weight 20k Da or less, preferably above 2 kDa, even more preferably between 2-10k Da, most preferably about 5 kDa.

6. Emulsifier according to any of the preceding claims, being a blend of the hydrolysed gelatin and the low bloom gelatin, preferably, being free of other hydrocolloids.

7. Emulsifier according to any of the preceding claims, comprising, apart from water, not more than 10 w/w%, preferably not more than 5 w/w%, more preferably not more than 2 w/w% other ingredients.

8. Emulsifier according to any of the preceding claims having a moisture content of 5 - 15 w/w%, preferably 7 - 12 w/w%, more about 8 - 10 w/w%.

9. Emulsifier according to any of the preceding claims, wherein the particle size, expressed in mesh, of the low bloom gelatin corresponds with that of the hydrolysed gelatin.

10. Emulsifier according to any of the preceding claims, wherein the particle size of the hydrolysed gelatin and of the low bloom gelatin is 75 - 125 mesh, corresponding with that of the US standard ASTM E11:01.

11. Method for the preparation of the emulsifier of claim 9 or 10, comprising the steps of:
a. dissolving both the hydrolysed gelatin and the low bloom gelatin in an aqueous medium, to form an emulsifier solution,
b. drying the emulsifier solution of step a. under the formation of a particulate, said drying step preferably comprising a spray drying or drum drying step.

12. Food product or food ingredient, comprising the emulsifier according to any of the claims 1 - 10 or as prepared according to claim 11, said food product preferably comprising 0.5 - 25 w/w% of the emulsifier, more preferably 1 - 15 w/w%, even more preferably 5 - 8 w/w%, based on the total ingredients of the food product.

13. Food product according to claim 12, being:
- mayonnaise or dairy mousse, the mayonnaise or dairy mousse preferably comprising 5 - 8 w/w % of the emulsifier, based on the food product, the dairy mousse preferably comprising 18 - 22 w/w% of the emulsifier, based on the food product, or being
- a dry mix for the preparation of an instant dairy mousse, in particular chocolate mousse.

14. Use of an emulsifier according to any of the claims 1 - 10 in the preparation of a food product or food ingredient, the food product or food ingredient preferably being mayonnaise or a dairy mousse, or as an ingredient of a dry mix for the preparation of a dairy mousse, in particular of a chocolate mousse.

15. Use of an emulsifier according to any of the claims 1 - 10 as egg substitute in the preparation of a food product or food ingredient, the food product or food ingredient preferably being mayonnaise or a dairy mousse.

## Patentansprüche

1. Emulgator, umfassend hydrolysierte Gelatine und ein Hydrokolloid, **dadurch gekennzeichnet, dass** das Hydrokolloid eine niederbloomige Gelatine mit einem Bloom-Wert von 125 oder weniger umfasst.

2. Emulgator gemäß Anspruch 1, der, bezogen auf das Gesamtgewicht der hydrolysierten Gelatine und der niederbloomigen Gelatine, Folgendes umfasst:
zu 85 - 98 Gew.-% hydrolysierte Gelatine und zu 15 - 2 Gew.-% niederbloomige Gelatine,
vorzugsweise zu 90 - 95 Gew.-% hydrolysierte Gelatine und zu 10 - 5 Gew.-% niederbloomige Gelatine,
noch bevorzugter zu 92 - 93 Gew.-% hydrolysierte Gelatine und zu 8 - 7 Gew.-% niederbloomige Gelatine.

3. Emulgator gemäß Anspruch 1 oder 2, wobei die niederbloomige Gelatine einen Bloom-Wert von 100 oder weniger, vorzugsweise 40 - 60, am bevorzugtesten etwa 50 aufweist.

4. Emulgator gemäß einem der vorangegangenen Ansprüche, wobei die niederbloomige Gelatine ein durchschnittliches Molekulargewicht zwischen 50 und 125 kDa, vorzugsweise zwischen 60 und 100 kDa, am bevorzugtesten etwa 70 kDa aufweist.

5. Emulgator gemäß einem der vorangegangenen Ansprüche, wobei die hydrolysierte Gelatine ein durchschnittliches Molekulargewicht von 20 kDa oder weniger, vorzugsweise über 2 kDa, noch bevorzugter zwischen 2 und 10 kDa, am bevorzugtesten etwa 5 kDa aufweist.

6. Emulgator gemäß einem der vorangegangenen Ansprüche, der eine Mischung aus der hydrolysierten Gelatine und der niederbloomigen Gelatine ist und vorzugsweise frei von anderen Hydrokolloiden ist.

7. Emulgator gemäß einem der vorangegangenen Ansprüche, der neben Wasser nicht mehr als 10 Gew.-%, vorzugsweise nicht mehr als 5 Gew.-%, noch bevorzugter nicht mehr als 2 Gew.-% andere Bestandteile umfasst.

8. Emulgator gemäß einem der vorangegangenen Ansprüche mit einem Feuchtigkeitsgehalt von 5 bis 15 Gew.-%, vorzugsweise 7 bis 12 Gew.-%, noch bevorzugter 8 bis 10 Gew.-%.

9. Emulgator gemäß einem der vorangegangenen Ansprüche, wobei die Partikelgröße, ausgedrückt in Mesh, der niederbloomigen Gelatine der der hydrolysieren Gelatine entspricht.

10. Emulgator gemäß einem der vorangegangenen Ansprüche, wobei die Partikelgröße der hydrolysierten Gelatine und der niederbloomigen Gelatine 75 - 125 Mesh entsprechend der US-Norm ASTM E11:01 beträgt.

11. Verfahren zur Herstellung des Emulgators von Anspruch 9 oder 10, das folgende Schritte umfasst:
a. Lösen sowohl der hydrolysierten Gelatine als auch der niederbloomigen Gelatine in einem wässrigen Medium zur Bildung einer Emulgatorlösung,
b. Trocknen der Emulgatorlösung aus Schritt a. unter Bildung von Partikeln, wobei der Trocknungsschritt vorzugsweise einen Sprühtrocknungs- oder Walzentrockungsschritt umfasst.

12. Lebensmittelprodukt oder Lebensmittelbestandteil, das/der den Emulgator gemäß einem der Ansprüche 1 - 10 oder wie gemäß Anspruch 11 hergestellt umfasst, wobei das Lebensmittelprodukt vorzugweise 0,5 - 25 Gew.-% des Emulgators, noch bevorzugter 1 - 15 Gew.-%, wiederum bevorzugter 5 - 8 Gew.-%, bezogen auf die Gesamtbestandteile des Lebensmittelproduktes, umfasst.

13. Lebensmittelprodukt gemäß Anspruch 12, das:
- eine Mayonnaise oder Milchproduktmousse ist, wobei die Mayonnaise oder Milchprodukmousse vorzugsweise 5 - 8 Gew.-% des Emulgators, bezogen auf das Lebensmittelprodukt, umfasst, die Milchproduktmousse vorzugsweise 18 - 22 Gew.-% des Emulgators, bezogen auf das Lebensmittelprodukt, umfasst oder
- eine Trockenmischung für die Herstellung einer Instant-Milchproduktmousse, insbesondere einer Schokoladenmousse, ist.

14. Anwendung eines Emulgators gemäß einem der Ansprüche 1 - 10 bei der Herstellung eines Lebensmittelprodukts oder Lebensmittelbestandteils, wobei das Lebensmittelprodukt oder der Lebensmittelbestandteil vorzugsweise Mayonnaise oder eine Milchproduktmousse ist, oder als Bestandteil einer Trockenmischung zur Herstellung einer Milchproduktmousse, insbesondere einer Schokoladenmousse.

15. Anwendung eines Emulgators gemäß einem der Ansprüche 1 - 10 als Ei-Ersatz bei der Herstellung eines Lebensmittelprodukts oder Lebensmittelbestandteils, wobei das Lebensmittelprodukt oder der Lebensmittelbestandteil vorzugsweise Mayonnaise oder eine Milchproduktmousse ist.

## Revendications

1. Émulsifiant, comprenant de la gélatine hydrolysée et un hydrocolloïde, **caractérisé en ce que** l'hydrocolloïde comprend de la gélatine à faible degré bloom ayant une valeur de bloom inférieure ou égale à 125.

2. Émulsifiant selon la revendication 1, comprenant, par rapport au poids total de la gélatine hydrolysée et de la gélatine à faible degré bloom :
85 à 98% en p/p de gélatine hydrolysée et 15 à 2% en p/p de gélatine à faible degré bloom,
de préférence 90 à 95% en p/p de gélatine hydrolysée et 10 à 5% en p/p de gélatine à faible degré bloom,
plus préférablement 92 à 93% en p/p de gélatine hydrolysée et 8 à 7% en p/p de gélatine à faible degré bloom.

3. Émulsifiant selon la revendication 1 ou 2, dans lequel la gélatine à faible degré bloom a une valeur de bloom inférieure ou égale à 100, de préférence allant de 40 à 60, idéalement d'environ 50.

4. Émulsifiant selon l'une des revendications précédentes, dans lequel la gélatine à faible degré bloom a un poids moléculaire moyen compris entre 50 et 125 kDa, de préférence entre 60 et 100 kDa, idéalement d'environ 70 kDa.

5. Émulsifiant selon l'une des revendications précédentes, dans lequel la gélatine hydrolysée a un poids moléculaire moyen inférieur ou égal à 20 kDa, de préférence supérieur à 2 kDa, encore plus préférablement entre 2 et 10 kDa, idéalement d'environ 5 kDa.

6. Émulsifiant selon l'une des revendications précédentes, qui est un mélange de la gélatine hydrolysée et de la gélatine à faible degré bloom, de préférence, étant exempt d'autres hydrocolloïdes.

7. Émulsifiant selon l'une des revendications précédentes, comprenant, à part l'eau, pas plus de 10% en p/p, de préférence pas plus de 5% en p/p, plus préférablement pas plus de 2% en p/p d'autres ingrédients.

8. Émulsifiant selon l'une des revendications précédentes ayant une teneur en humidité allant de 5 à 15% en p/p, de préférence de 7 à 12% en p/p, plus préférablement d'environ 8 à 10% en p/p.

9. Émulsifiant selon l'une des revendications précédentes, dans lequel la taille de particules, exprimée en mesh, de la gélatine à faible degré bloom correspond à celle de la gélatine hydrolysée.

10. Émulsifiant selon l'une des revendications précédentes, dans lequel la taille de particules de la gélatine hydrolysée et de la gélatine à faible degré bloom est comprise entre 75 et 125 mesh, correspondant à celle de la norme américaine ASTM E11:01.

11. Procédé de préparation de l'émulsifiant de la revendication 9 ou 10, comprenant les étapes qui consistent :
a. à dissoudre, à la fois, de la gélatine hydrolysée et de la gélatine à faible degré bloom dans un milieu aqueux, pour former une solution d'émulsifiant,
b. à sécher la solution d'émulsifiant de l'étape a. au cours de la formation de particules, ladite étape de séchage comprenant de préférence une étape de séchage par pulvérisation ou de séchage à tambour.

12. Produit alimentaire ou ingrédient alimentaire, comprenant l'émulsifiant selon l'une des revendications 1 à 10 ou tel que préparé selon la revendication 11, ledit produit alimentaire comprenant de préférence 0,5 à 25% en p/p de l'émulsifiant, plus préférablement 1 à 15% en p/p, encore plus préférablement 5 à 8% en p/p, par rapport au total des ingrédients du produit alimentaire.

13. Produit alimentaire selon la revendication 12, qui est :
- de la mayonnaise ou une mousse laitière, la mayonnaise ou la mousse laitière comprenant de préférence 5 à 8% en p/p de l'émulsifiant, par rapport au produit alimentaire, la mousse laitière comprenant de préférence 18 à 22% en p/p de l'émulsifiant, par rapport au produit alimentaire, ou qui est
- un mélange sec pour la préparation d'une mousse laitière instantanée, en particulier une mousse au chocolat.

14. Utilisation d'un émulsifiant selon l'une des revendications 1 à 10 dans la préparation d'un produit alimentaire ou d'un ingrédient alimentaire, le produit alimentaire ou l'ingrédient alimentaire étant de préférence de la mayonnaise ou une mousse laitière, ou comme ingrédient d'un mélange sec pour la préparation d'une mousse laitière, en particulier d'une mousse au chocolat.

15. Utilisation d'un émulsifiant selon l'une des revendications 1 à 10 comme substitut d'oeufs dans la préparation d'un produit alimentaire ou d'un ingrédient alimentaire, le produit alimentaire ou l'ingrédient alimentaire étant de préférence de la mayonnaise ou une mousse laitière.
